# EUROPÄISCHE PATENTSCHRIFT

(11) **EP 2 502 768 B1**
(45) Veröffentlichungstag und Bekanntmachung des Hinweises auf die Patenterteilung: **13.07.2016**
(21) Anmeldenummer: 11158182.3
(22) Anmeldetag: 15.03.2011
(51) Int. Cl.: B60J 1/02, B32B 17/10, B60R 1/04, B60R 1/12

(54) **Windschutzscheibe, Innenrückblickeinheit und Innenrückblickeinheitanordnung für ein Kraftfahrzeug**
Windscreen, internal rear view unit and internal rear view unit assembly for a motor vehicle
Pare-brise, unité de rétroviseur intérieur et agencement d'unité de rétroviseur intérieur pour un véhicule automobile

(43) Veröffentlichungstag der Anmeldung: 26.09.2012
(73) Patentinhaber: SMR Patents S.à.r.l., 1653 Luxembourg (LU)
(72) Erfinder: Liesener, Alf, 73614 Schorndorf (DE)
(74) Vertreter: Weber-Bruls, Dorothée

(56) Entgegenhaltungen:
- WO-A1-2009/050519
- DE-A1- 3 734 393
- DE-A1- 10 005 248
- DE-A1- 10 336 972
- DE-A1- 19 960 886
- DE-A1-102005 042 960
- DE-A1-102009 017 385
- US-A- 3 199 075
- US-A- 5 308 247
- US-A1- 2005 078 389
- US-A1- 2006 220 817
- US-A1- 2009 128 431
- US-A1- 2010 060 077

## Beschreibung

Die Erfindung betrifft eine Windschutzscheibe für ein Kraftfahrzeug gemäß dem Oberbegriff des Anspruchs 1 und eine Innenrückblickeinheitanordnung gemäß dem Oberbegriff des Anspruchs 5.

Eine gattungsgemäße Windschutzscheibe ist bekannt aus WO 2009/050519 A1. Eine Innenrückblickeinheit, bei der zwischen Kopf und Fuß ein Haltearm angeordnet ist, ist bekannt aus US 5,308,247.

Unter dem Begriff Innenrückblickeinheit zusammengefasst sind Innenrückblickspiegelanordnungen und Innenrückblickkameraanordnungen bekannt, welche einem Fahrer eines Kraftfahrzeugs einen Einblick in einen oder mehrere Bereiche einer Fahrzeugumgebung zu ermöglichen, die bei auf den Fahrbahnverlauf gerichtetem Blickfeld des Fahrers von dessen Sitzplatz aus nicht einsehbar sind.

Erstere bedienen sich im Wesentlichen einer oder mehrerer kurz unter dem Begriff Spiegelglas zusammengefasster verspiegelter Flächen, Zweitere im Wesentlichen eines oder mehrerer unter dem Begriff Außenkamera zusammengefasster, beispielsweise bilderfassender bzw. bildgebender Sensoren sowie mindestens eines unter dem Begriff Anzeigevorrichtung zusammengefassten Displays oder Bildschirms zur natürlichen oder abstrakten Darstellung zumindest eines von wenigstens einer Außenkamera erfassten Bereichs der Fahrzeugumgebung.

Innenrückblickeinheiten gestatten entsprechend einem im Fahrzeuginnenraum untergebrachten Spiegel Einblick in einen typischerweise vom Fahrzeuginnenraum aus gesehen mittig hinter dem Kraftfahrzeug liegenden Bereich der Fahrzeugumgebung.

Innenrückblickspiegelanordnungen sind vorzugsweise in einem peripheren Sichtfeld des Fahrers und gleichzeitig an einer Einbauposition untergebracht, von welcher aus deren Spiegelglas einen Einblick in einen typischerweise rückwärtig des Sitzplatzes des Fahrers liegenden Bereich der Fahrzeugumgebung ermöglicht.

Für eine Innenrückblickspiegelanordnung geeignet sind deshalb erhabene Einbaupositionen beispielsweise an der Innenseite der Windschutzscheibe oder einem diese umgebenden Rahmen oder beispielsweise an einer Konsole am Dachhimmel eines Kraftfahrzeugs.

Ein peripheres Sichtfeld kennzeichnet sich hierbei dadurch aus, dass es bei auf den Fahrbahnverlauf gerichtetem Blickfeld des Fahrers in dessen peripherem Blickfeld liegt jedoch beispielsweise durch eine Veränderung der Blickrichtung, beispielsweise durch Schwenken der Augen oder Drehen des Kopfes, in dessen unmittelbares Blickfeld gerückt werden kann.

Spiegelgläser von Innenrückblickspiegelanordnungen bilden dabei vom Fahrer eines Kraftfahrzeugs einsehbare Projektionsflächen für diejenigen Bereiche der Fahrzeugumgebung, in welche sie Einblick gewähren.

Bei einer Innenrückblickkameraanordnung ist die Anordnung der mindestens einen Anzeigevorrichtung demgegenüber unabhängig vom einzublickenden Bereich der Fahrzeugumgebung. Hierbei werden die eine oder mehreren Außenkameras an geeigneten Stellen am oder im Kraftfahrzeug verbaut und übertragen die von ihnen erfassten Signale zur visuellen Darstellung für den Fahrer auf eine oder mehrere in dessen unmittelbarem oder peripherem Blickfeld angeordnete Anzeigevorrichtungen.

Die mindestens eine Anzeigevorrichtung einer Innenrückblickkameraanordnung bildet dabei vom Fahrer eines Kraftfahrzeugs einsehbare Projektionsfläche für diejenigen Bereiche der Fahrzeugumgebung, in welche die jeweilige mindestens eine Außenkamera der Innenrückblickkameraanordnung Einblick gewährt.

Wegen des gewohnten Umgangs mit Innenrückblickspiegelanordnungen sowie deren gewohnter Abbildung des mit ihrer Hilfe einsehbaren Bereichs der Fahrzeugumgebung von deren erhabener Einbauposition aus wird die Unterbringung einer Innenrückblickeinheit beispielsweise an der Innenseite der Windschutzscheibe oder einem diese umgebenden Rahmen oder beispielsweise an einer Konsole am Dachhimmel eines Kraftfahrzeugs als vorteilhaft empfunden.

Von diesen als vorteilhaft empfundenen erhabenen Einbaupositionen hat sich die Anordnung an der Innenseite der Windschutzscheibe als besonders bevorzugt herausgestellt.

Darüber hinaus hat sich für die Anordnung einer Innenrückblickeinheit an einer erhabenen Einbauposition, wie beispielsweise an der Innenseite einer Windschutzscheibe, als vorteilhaft herausgestellt, wenn die Innenrückblickeinheit aus einem kraftfahrzeugseitig beispielsweise an der Innenseite der Windschutzscheibe zu befestigenden Fuß und einem gegenüber diesem verstellbaren Kopf besteht, welcher die Projektionsfläche beherbergt. Kopf und Fuß der Innenrückblickeinheit können beispielsweise vermittels eines Kugelgelenks gelenkig miteinander verbunden sein, so dass der Kopf gegenüber dem Fuß zumindest in eine individuelle Verstelllage abhängig von Größe und Sitzposition des Fahrers des Kraftfahrzeugs einstellbar ist.

Mit der Unterbringung einer Innenrückblickeinheit an einer erhabenen Einbauposition verbunden, wie beispielsweise an der Innenseite einer Windschutzscheibe, ist der zusätzliche Vorteil einer Zurverfügungstellung einer zentralen, hochgesetzten Beherbergungsmöglichkeit für im Fahrzeuginnenraum vorzugsweise ebenfalls an erhabener Einbauposition anzuordnende elektrische Komponenten. Beispiele solcher elektrischer Komponenten, für die gegebenenfalls eine oder mehrere individuelle Einstellungen vorgenommen werden können, sind:
- ein elektromotorischer Verstellantrieb zur Einstellung einer individuellen Verstelllage des Kopfs gegenüber dem Fuß oder der Projektionsfläche gegenüber dem Kopf abhängig von Größe und Sitzposition des Fahrers des Kraftfahrzeugs,
- eine Innenraumbeleuchtung, welche zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann,
- eine ambiente Innenraumbeleuchtung, welche zur individuellen Einstellung ein- und ausgeschaltet und/oder in ihrer Helligkeit verändert werden kann,
- eine Lesebeleuchtung, welche zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann,
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können,
- Sensoren einer Fahrzeuginnenraumklimatisierung, welche zur individuellen Einstellung vollständig ein- und ausgeschaltet, in Bezug auf eine einzuhaltende Temperatur im Fahrzeuginnenraum verändert oder zwischen einem Betrieb beispielsweise einer Kältemaschine und deren Nichtbetrieb umgeschaltet werden kann,
- eine von außen durch die Windschutzscheibe hindurch sichtbare Anzeigevorrichtung beispielsweise einer elektronischen Parkscheibe und/oder eines Mautsystems, welche zu deren individueller Einstellung vollständig ein- und ausgeschaltet sowie in Bezug auf deren Anzeige verstellt werden können,
- eine vom Fahrzeuginnenraum aus einsehbare Anzeigevorrichtung beispielsweise eines Kompass und/oder eines Informationssystems, beispielsweise zur Anzeige von Warnmeldungen, welche zu deren individueller Einstellung vollständig ein- und ausgeschaltet sowie in Bezug auf deren Anzeige verstellt werden können,
- ein oder mehrere, unter dem Begriff Bedienelemente zusammengefasste Taster, Schalter, Knöpfe, Regler für eine oder mehrere beispielsweise von der Innenrückblickeinheit zumindest zum Teil beherbergte elektrische Komponenten.

Die Aufzählung umfasst nur wenige Beispiele einer Vielzahl möglicher, allein oder in beliebiger Kombination von einer Innenrückblickeinheit zumindest zum Teil beherbergbarer elektrischer Komponenten.

Beispielsweise handelt es sich bei der Anzeigevorrichtung einer Innenrückblickkameraanordnung oder bei einem elektrochromatisch abblendbaren Spiegelglas einer Innenrückblickspiegelanordnung ebenfalls um eine elektrische Komponente einer Innenrückblickeinheit im Sinne der obigen Aufzählung.

Aus der bevorzugten erhabenen Einbauposition an der Innenseite der Windschutzscheibe eines Kraftfahrzeugs sowie der zumindest teilweisen Beherbergung einer oder mehrerer elektrischer Komponenten durch Innenrückblickeinheiten ergibt sich die Notwendigkeit der Herstellung einer oder mehrerer elektrischer Verbindungen beispielsweise zumindest zwischen einem Bordnetz des Kraftfahrzeugs und der Innenrückblickeinheit. Gegebenenfalls können darüber hinaus eine oder mehrere elektrische Verbindungen beispielsweise mit einem Fahrzeuginformationssystem, beispielsweise einem CAN-Bus vorgesehen sein. Ferner können eine oder mehrere elektrische Verbindungen mit zumindest einem eine wenigstens zum Teil von der Innenrückblickeinheit beherbergte elektrische Komponente von außerhalb der Innenrückblickeinheit steuernden Schalt- und/oder Steuermittel vorgesehen sein. Bislang werden derartige elektrische Verbindungen in Form mindestens einer Kabelverbindung ausgehend von einer Konsole am Dachhimmel zum Fuß der Innenrückblickeinheit ausgebildet. Die Kabel verlaufen dabei unter einer Abdeckung in einem an der Innenseite der Windschutzscheibe entlang von der Konsole zum Fuß der Innenrückblickeinheit führenden Kanal. Der Kanal kann durch die Abdeckung gebildet sein.

Nachteilig hieran sind der hohe Montageaufwand zur Herstellung der mindestens einen elektrischen Verbindung sowie der hohe Herstellungsaufwand für die verschiedenen, die mindestens eine elektrische Verbindung zum Fuß der Innenrückblickeinheit kaschierenden Bauelemente für den Kanal und die Abdeckung. Darüber hinaus ist die ästhetische Ausgestaltung einer solchen Abdeckung und eines solchen Kanals fragwürdig.

Durch DE 2 057 580 ist eine als Antenne dienende Windschutzscheibe bekannt. Die Windschutzscheibe besteht aus Schichtglas, mit zwei äußeren Glasscheiben und einer zwischen ihnen befindlichen Schicht aus Kunststoff, in welcher sich ein Antennendraht mit einem Anschlussstück für einen Rundfunkempfänger befindet.

Eine Aufgabe der Erfindung ist die Weiterentwicklung der mindestens einen elektrischen Verbindung zu einer an der Innenseite einer Windschutzscheibe eines Kraftfahrzeugs angeordneten Innenrückblickeinheit im Ganzen oder in Teilen. Die Weiterentwicklung im Ganzen betrifft hierbei eine die elektrische Verbindung zu der Innenrückblickeinheit umfassende Innenrückblickeinheitanordnung, die Weiterentwicklung in Teilen zumindest Abschnitte der elektrischen Verbindung umfassende Komponenten der Innenrückblickeinheitanordnung. Die elektrische Verbindung soll einen geringen Montageaufwand sowie einen geringen Herstellungsaufwand dahingehend aufweisen, dass unter anderem möglichst wenige Bauteile benötigt werden, um die elektrische Verbindung zu kaschieren.

Die Aufgabe wird gelöst mit den Merkmalen der unabhängigen Ansprüche. Ein erster Gegenstand der Erfindung betrifft demnach eine Windschutzscheibe für ein Kraftfahrzeug. Um zu einer elektrischen Verbindung zu einer an der Innenseite der Windschutzscheibe angeordneten Innenrückblickeinheit beizutragen und eine solche herzustellen umfasst die Windschutzscheibe:
- mindestens eine Leiterbahn,
- welche mindestens eine Leiterbahn von wenigstens einem Rand der Windschutzscheibe zu einer auf der Innenseite der Windschutzscheibe ausgebildeten Fußfläche führt,
- welche Fußfläche einen Teil der Oberfläche an der Innenseite der Windschutzscheibe einnimmt und an welcher Fußfläche bei an der Innenseite der Windschutzscheibe vorgesehener Einbauposition der Fuß einer Innenrückblickeinheit aufsteht,
- welche mindestens eine Leiterbahn zumindest an der Fußfläche wenigstens eine an der Innenseite der Windschutzscheibe vorgesehene erste elektrisch leitende Partie der Oberfläche der Windschutzscheibe bildet,
- welche mindestens eine Leiterbahn wenigstens eine zumindest an dem mindestens einen Rand der Windschutzscheibe vorgesehene zweite elektrisch leitende Partie der Oberfläche der Windschutzscheibe bildet, und
- welche mindestens eine Leiterbahn zumindest abschnittsweise von dem wenigstens einen Rand zu der Fußfläche wenigstens auf die Innenseite der Windschutzscheibe aufgeklebt vorgesehen ist.

Bei der Innenseite handelt es sich um die bei in ein Kraftfahrzeug eingebautem Zustand einem Fahrzeuginnenraum zugewandte Oberfläche der Windschutzscheibe. Bei einer Außenseite handelt es sich demgegenüber um eine bei in ein Kraftfahrzeug eingebautem Zustand dem Fahrzeuginnenraum abgewandten und Umwelt- sowie Witterungseinflüssen ausgesetzten Oberfläche der Windschutzscheibe. Bei dem mindestens einen Rand handelt es sich um wenigstens einen Abschnitt zumindest einer Innen- und Außenseite der Windschutzscheibe verbindenden Schmalseite der Windschutzscheibe und/oder einen an eine solche Schmalseite angrenzenden Bereich der Innen- und/oder Außenseite der Windschutzscheibe.

Die mindestens eine Leiterbahn bildet wenigstens einen Abschnitt der elektrischen Verbindung zu einer mit ihrem Fuß auf der Fußfläche aufstehenden, an der Innenseite der Windschutzscheibe angeordneten Innenrückblickeinheit. Um die Leiterbahn zu kaschieren, genügt es, den Bereich der Windschutzscheibe, in dem diese vom Rand zu der Fußfläche verläuft, beispielsweise zu schwärzen, beispielsweise durch einen Farb- oder Folienauftrag, wie dies bereits bei rahmenlosen, in eingebautem Zustand kraftfahrzeugseitig beispielsweise verklebten Windschutzscheiben der Fall ist.

Die mindestens eine erste elektrisch leitende Partie dient dabei der innenrückblickeinheitenseitigen elektrischen Verbindung, wohingegen die mindestens eine zweite elektrisch leitende Partie der kraftfahrzeugseitigen elektrischen Verbindung dient. Beispielsweise kann die mindestens eine zweite elektrisch leitende Partie kraftfahrzeugseitig mit beispielsweise einem Bordnetz des Kraftfahrzeugs und/oder mit einem Fahrzeuginformationssystem, beispielsweise einem CAN-Bus, und/oder mit zumindest einem eine wenigstens zum Teil von der Innenrückblickeinheit beherbergte elektrische Komponente von außerhalb der Innenrückblickeinheit steuernden Schalt- und/oder Steuermittel verbunden werden. Hierzu kann kraftfahrzeugseitig mindestens eine dritte elektrisch leitende Partie vorgesehen sein, welche bei in ein Kraftfahrzeug eingebauter Windschutzscheibe mit der mindestens einen zweiten elektrisch leitenden Partie in elektrisch leitende Verbindung tritt, um die elektrische Verbindung herzustellen.

Als eine Leiterbahn kommt hier beispielsweise eine Kupferfolie oder dergleichen, allgemein eine Folie oder ein dünnes Blech aus einem elektrisch leitfähigen Werkstoff in Frage. Beispielsweise kann einseitig eine Klebeschicht, beispielsweise eine doppelseitige Klebeschicht aufgetragen sein, um die Leiterbahn an die Innenseite der Windschutzscheibe zu kleben. Zwischen der wenigstens einen ersten elektrisch leitenden Partie und der wenigstens einen zweiten elektrisch leitenden Partie kann die mindestens eine auf die Innenseite der Windschutzscheibe aufgeklebte Leiterbahn beispielsweise durch eine z.B. ebenfalls aufgeklebte Folie oder einen Lack oder dergleichen kaschiert sein.

Die mindestens eine Leiterbahn kann von dem wenigstens einen Rand zu der Fußfläche zumindest abschnittsweise wenigstens auf die Innenseite der Windschutzscheibe beispielsweise im Siebdruck aus einem elektrisch leitfähigen Material aufgedruckt vorgesehen sein.

Die mindestens eine Leiterbahn kann von dem wenigstens einen Rand zu der Fußfläche wenigstens abschnittsweise im Inneren der Windschutzscheibe verlaufend angeordnet vorgesehen sein.

Die mindestens eine Leiterbahn kann in die Windschutzscheibe integriert sein.

Ein zweiter Gegenstand der Erfindung betrifft eine Innenrückblickeinheitanordnung für ein Kraftfahrzeug bestehend aus einer Windschutzscheibe und einer an deren Innenseite angeordneten Innenrückblickeinheit.

Ein zweiter Gegenstand der Erfindung betrifft eine Innenrückblickeinheit für ein Kraftfahrzeug. Die Innenrückblickeinheit weist einen Fuß zur Anordnung an einer Innenseite einer Windschutzscheibe auf. Darüber hinaus weist die Innenrückblickeinheit einen an dem Fuß angeordneten Kopf mit einer Projektionsfläche auf.

Bei der Innenseite handelt es sich um die bei in ein Kraftfahrzeug eingebautem Zustand einem Fahrzeuginnenraum zugewandte Oberfläche der Windschutzscheibe.

Die Innenrückblickeinheit beherbergt zumindest zum Teil wenigstens eine elektrische Komponente.

Der Fuß der Innenrückblickeinheit weist eine Verbindungsfläche auf. Der Fuß wird mit an der Innenseite der Windschutzscheibe anliegender Verbindungsfläche an einer vorgesehenen Einbauposition auf einer Fußfläche an der Innenseite der Windschutzscheibe aufstehend befestigt.

In der Verbindungsfläche ist mindestens ein mit wenigstens einer von der Innenrückblickeinheit zumindest zum Teil beherbergten elektrischen Komponente in elektrisch leitender Verbindung stehender elektrischer Kontakt untergebracht. Der mindestens eine elektrische Kontakt bildet wenigstens eine zumindest an der Verbindungsfläche ausgebildete vierte elektrisch leitende Partie der Oberfläche des Fußes der Innenrückblickeinheit.

Zur Herstellung einer elektrischen Verbindung beispielsweise von einem Bordnetz und/oder einem CAN-Bus eines Kraftfahrzeugs zu der zumindest zum Teil von der Innenrückblickeinheit beherbergten elektrischen Komponente können zusätzlich zu der mindestens einen vierten elektrisch leitenden Partie miteinander korrespondierend wenigstens:
- eine erste elektrisch leitende Partie zumindest an einer an der Innenseite der Oberfläche einer Windschutzscheibe ausgebildeten Fußfläche, an welcher bei an der Innenseite der Windschutzscheibe vorgesehener Einbauposition der Fuß der Innenrückblickeinheit aufsteht,
- eine mit der ersten elektrisch leitenden Partie elektrisch leitend verbundene zweite elektrisch leitende Partie zumindest an dem wenigstens einen Rand der Windschutzscheibe auf der Oberfläche der Windschutzscheibe,
- eine bei in ein Kraftfahrzeug eingebauter Windschutzscheibe mit wenigstens einer zweiten elektrisch leitenden Partie in elektrischem Kontakt stehende, beispielsweise mit dem Bordnetz und/oder dem CAN-Bus oder dergleichen elektrisch verbundene, kraftfahrzeugseitige, dritte elektrisch leitende Partie
vorgesehen sein.

Der mindestens eine elektrische Kontakt bildet dadurch ebenso wie die mindestens eine Leiterbahn der zuvor beschriebenen Windschutzscheibe wenigstens einen Abschnitt der elektrischen Verbindung zu einer mit ihrem Fuß auf der Fußfläche aufstehenden, an der Innenseite der Windschutzscheibe angeordneten Innenrückblickeinheit.

Kopf und Fuß der Innenrückblickeinheit sind vermittels eines Kugelgelenks gelenkig miteinander verbunden sein, so dass der die Projektionsfläche beherbergende Kopf gegenüber dem Fuß zumindest in eine individuelle Verstelllage abhängig von Größe und Sitzposition des Fahrers des Kraftfahrzeugs einstellbar ist. Alternativ kann die Projektionsfläche gegenüber dem Kopf verstellbar angeordnet sein, um abhängig von Größe und Sitzposition des Fahrers des Kraftfahrzeugs in eine individuelle Verstelllage einstellbar zu sein.

Die gelenkige Verbindung umfasst einen Abklappmechanismus umfassen, vermittels dem der Kopf gegenüber dem Fuß beispielsweise durch Betätigung einer Bedieneinrichtung vorzugsweise um einen definierten Schwenkwinkel aus einer Betriebsstellung um eine z.B. im Wesentlichen horizontal verlaufende Achse in eine Abklappstellung und umgekehrt verschwenkt werden kann, um eine Blendung durch rückwärtige Lichtquellen in der Abklappstellung abzumindern.

Der Abklappmechanismus kann mit einem elektromotorischen Verstellantrieb ausgestattet sein, um den Kopf gegenüber dem Fuß beispielsweise um einen vorzugsweise definierten Schwenkwinkel aus der Betriebsstellung um eine z.B. im Wesentlichen horizontale Achse in die Abklappstellung und umgekehrt zu verschwenken. Dadurch wird eine durch Betätigung eines handbetätigten Abklappmechanismus stets auftretende latente Verstellung der individuellen Verstelllage des Kopfs gegenüber dem Fuß vermieden. Der elektromotorische Verstellantrieb des Abklappmechanismus stellt eine mögliche zumindest zum Teil von der Innenrückblickeinheit beherbergte elektrische Komponente dar, zu welcher vermittels der zuvor beschriebenen, miteinander korrespondierenden ersten, zweiten, dritten und vierten elektrisch leitenden Partien eine elektrische Verbindung hergestellt werden kann.

Alternativ oder zusätzlich zu einem elektromotorischen Verstellantrieb eines Abklappmechanismus kommen einzeln oder in Kombination miteinander beispielsweise:
- ein elektromotorischer Verstellantrieb zur Einstellung einer individuellen Verstelllage des Kopfs gegenüber dem Fuß oder der Projektionsfläche gegenüber dem Kopf abhängig von Größe und Sitzposition des Fahrers des Kraftfahrzeugs, und/oder
- eine Innenraumbeleuchtung, welche beispielsweise zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann, und/oder
- eine ambiente Innenraumbeleuchtung, welche beispielsweise zur individuellen Einstellung ein- und ausgeschaltet und/oder in ihrer Helligkeit verändert werden kann,
- eine Lesebeleuchtung, welche beispielsweise zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann, und/oder
- ein Mikrofon und/oder einen oder mehrere Lautsprecher eines Telefonsystems und/oder einer Fahrzeuginnenraumbeschallung, welche beispielsweise zu deren individueller Einstellung ein- und ausgeschaltet und/oder in deren Empfindlichkeit oder Lautstärke verändert werden können, und/oder
- Sensoren einer Fahrzeuginnenraumklimatisierung, welche beispielsweise zur individuellen Einstellung vollständig ein- und ausgeschaltet, in Bezug auf eine einzuhaltende Temperatur im Fahrzeuginnenraum verändert oder zwischen einem Betrieb beispielsweise einer Kältemaschine und deren Nichtbetrieb umgeschaltet werden kann, und/oder
- eine von außen durch die Windschutzscheibe hindurch sichtbare Anzeigevorrichtung beispielsweise einer elektronischen Parkscheibe und/oder eines Mautsystems, welche beispielsweise zu deren individueller Einstellung vollständig ein- und ausgeschaltet sowie in Bezug auf deren Anzeige verstellt werden können, und/oder
- eine vom Fahrzeuginnenraum aus einsehbare Anzeigevorrichtung beispielsweise eines Kompass und/oder eines Informationssystems, beispielsweise zur Anzeige von Warnmeldungen, welche beispielsweise zu deren individueller Einstellung vollständig ein- und ausgeschaltet sowie in Bezug auf deren Anzeige verstellt werden können, und/oder
- eine Sendeeinrichtung zur Fernbetätigung eines elektrischen Torantriebs, beispielsweise eines Hof- und/oder Garagentors, und/oder
- ein oder mehrere, unter dem Begriff Bedienelemente zusammengefasste Taster, Schalter, Knöpfe, Regler für eine oder mehrere beispielsweise von der Innenrückblickeinheit zumindest zum Teil beherbergte elektrische Komponenten,
als mögliche zumindest zum Teil von der Innenrückblickeinheit beherbergte elektrische Komponenten in Frage, zu welchen vermittels der zuvor beschriebenen, miteinander korrespondierenden ersten, zweiten, dritten und vierten elektrisch leitenden Partien eine elektrische Verbindung hergestellt sein kann.

Bei der Innenrückblickeinheit kann es sich um eine Innenrückblickspiegelanordnung oder um eine Innenrückblickkameraanordnung handeln.

Die als Innenrückblickspiegelanordnung ausgeführte Innenrückblickeinheit weist unter dem Begriff Spiegelglas zusammengefasst mindestens eine reflektierende bzw. verspiegelte Fläche auf, welche die vom Fahrer eines Kraftfahrzeugs einsehbare Projektionsfläche bildet. Die Projektionsfläche gewährt dem Fahrer Einblick in einen oder mehrere Bereiche einer Fahrzeugumgebung, in welche dieser bei auf den Fahrbahnverlauf gerichtetem Blickfeld von dessen Sitzplatz aus sonst keine Einsicht hätte. Zur Vermeidung einer Blendung durch rückwärtige Lichtquellen kann sowohl alternativ als auch zusätzlich zu einem Abklappmechanismus eine elektrochromatische Abblendung des Spiegelglases vorgesehen sein. Auch ein elektrochromatisch abblendbares Spiegelglas stellt ein Beispiel für eine zumindest zum Teil von der Innenrückblickeinheit beherbergte elektrische Komponente dar, zu der vermittels der zuvor beschriebenen, miteinander korrespondierenden ersten, zweiten, dritten und vierten elektrisch leitenden Partien eine elektrische Verbindung hergestellt sein kann.

Die als Innenrückblickkameraanordnung ausgeführte Innenrückblickeinheit umfasst unter dem Begriff Außenkamera zusammengefasst mindestens einen beispielsweise bilderfassenden bzw. bildgebenden Sensor sowie unter dem Begriff Anzeigevorrichtung zusammengefasst mindestens ein Display oder einen Bildschirm zur natürlichen oder abstrakten Darstellung zumindest eines von der wenigstens einen Außenkamera erfassten Bereichs der Fahrzeugumgebung. Die Anzeigevorrichtung bildet die vom Fahrer eines Kraftfahrzeugs einsehbare Projektionsfläche für diejenigen Bereiche der Fahrzeugumgebung, in welche die mindestens eine Außenkamera der Innenrückblickkameraanordnung Einblick gewährt. Auch eine Anzeigevorrichtung einer Innenrückblickkameraanordnung stellt ein Beispiel für eine zumindest zum Teil von der Innenrückblickeinheit beherbergte elektrische Komponente dar, zu der vermittels der zuvor beschriebenen, miteinander korrespondierenden ersten, zweiten, dritten und vierten elektrisch leitenden Partien eine elektrische Verbindung hergestellt sein kann.

Die Innenrückblickeinheitanordnung kennzeichnet sich durch eine zuvor beschriebene Windschutzscheibe und eine an deren Innenseite befestigte, ebenfalls zuvor beschriebene Innenrückblickeinheit mit einer zumindest zum Teil von dieser beherbergten elektrischen Komponente aus.

Die Verbindungsfläche des Fußes der Innenrückblickeinheit ist dabei an der Fußfläche der Windschutzscheibe derart anliegend befestigt, dass mindestens eine an der Verbindungsfläche ausgebildete vierte elektrisch leitende Partie der Oberfläche des Fußes der Innenrückblickeinheit in elektrisch leitender Verbindung mit mindestens einer an der Fußfläche ausgebildeten ersten elektrisch leitenden Partie der Oberfläche der Windschutzscheibe steht.

Vermittels der windschutzscheibenseitig, innenrückblickeinheitsseitig sowie kraftfahrzeugseitig vorgesehenen und miteinander korrespondierenden jeweils mindestens einen ersten, zweiten und vierten, sowie außerhalb der Innenrückblickeinheitanordnung kraftfahrzeugseitig vorgesehenen dritten elektrisch leitenden Partien ist eine elektrische Verbindung zu der wenigstens einen zumindest zum Teil von der Innenrückblickeinheit beherbergten elektrischen Komponente hergestellt.

Hierzu sind die einander zugeordneten mindestens einen ersten und vierten Partien sowie die einander zugeordneten mindestens einen zweiten und dritten Partien deckungsgleich ausgebildet, so dass bei auf der Fußfläche aufstehendem Fuß der Innenrückblickeinheit einander zugeordnete erste und vierte elektrisch leitende Partien der Windschutzscheibe und der Verbindungsfläche miteinander korrespondieren und miteinander in elektrische Verbindung treten, und dass bei in ein Kraftfahrzeug eingebauter Windschutzscheibe der Innenrückblickeinheitanordnung einander zugeordnete zweite und dritte elektrisch leitende Partien windschutzscheibenseitig und kraftfahrzeugseitig miteinander korrespondieren und miteinander in elektrisch leitende Verbindung treten. Die miteinander korrespondierenden mindestens einen ersten, zweiten und vierten, sowie gegebenenfalls kraftfahrzeugseitig dritten elektrisch leitenden Partien stellen dabei eine elektrische Verbindung zu mindestens eine zumindest zum Teil von der Innenrückblickeinheit beherbergten elektrischen Komponente her.

Vorteile der Erfindung gegenüber dem Stand der Technik ergeben sich unter anderem durch einen geringen Montage- und Herstellungsaufwand. Der geringe

Montageaufwand ist insbesondere darauf zurückzuführen, dass keinerlei Kabelverbindungen sowie zu deren Kaschierung benötigte Bauteile für Schächte, Abdeckungen und dergleichen montiert werden müssen. Hieraus geht auch der geringe Herstellungsaufwand hervor, da weder zu konfigurierende Kabelverbindungen, noch Bauteile für diese kaschierende Schächte, Kanäle oder Abdeckungen benötigt werden.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: eine Innenrückblickeinheitanordnung für ein Kraftfahrzeug bestehend aus einer Windschutzscheibe und einer an deren Innenseite angeordneten Innenrückblickeinheit in noch vormontiertem Zustand in teilweise geschnittener Seitenansicht.
- Fig. 2: die Innenrückblickeinheit der Innenrückblickeinheitanordnung aus Fig. 1 in noch vormontiertem Zustand von der Verbindungsfläche her gesehen.

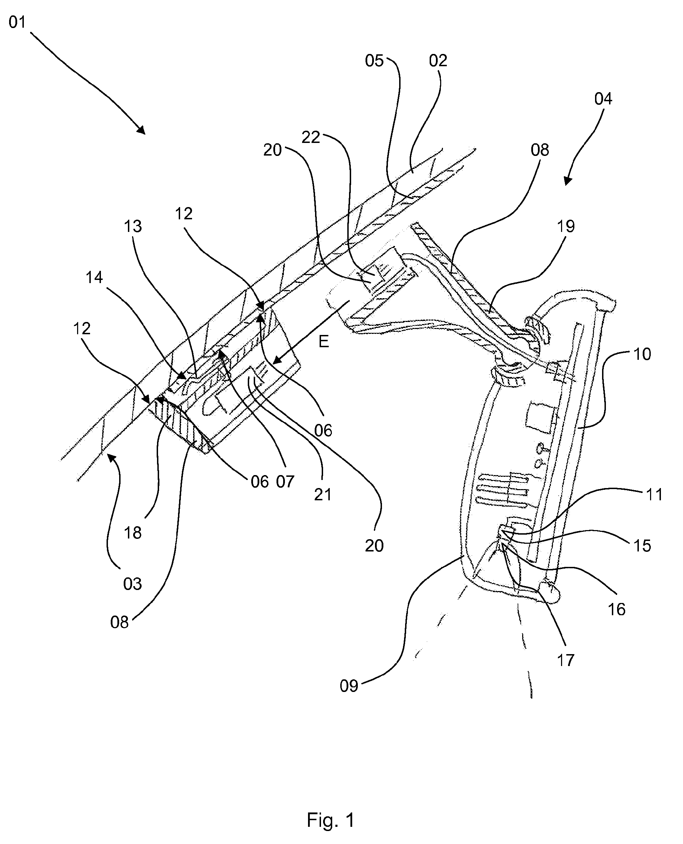

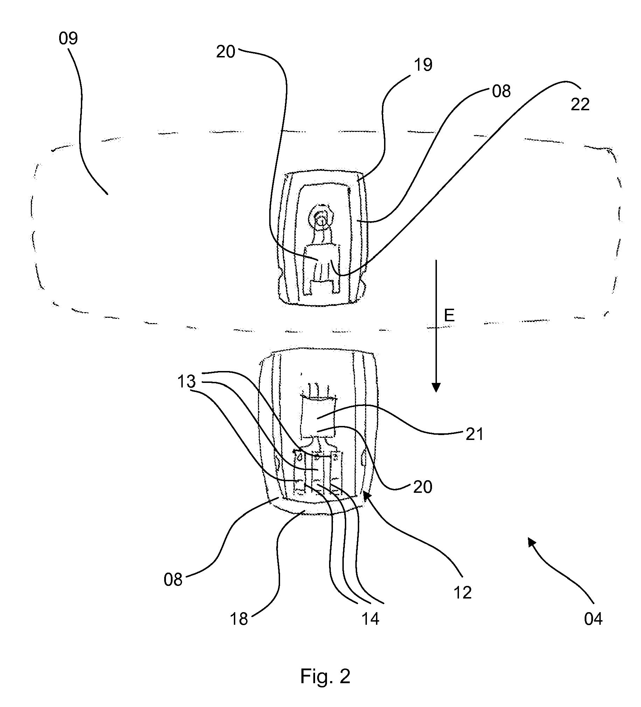

Eine in den Fig. 1 und 2 ganz oder in Teilen dargestellte Innenrückblickeinheitanordnung 01 besteht im Wesentlichen aus einer Windschutzscheibe 02 und einer an deren Innenseite 03 angeordneten Innenrückblickeinheit 04.

Bei der Innenseite 03 handelt es sich um die bei in ein Kraftfahrzeug eingebautem Zustand einem Fahrzeuginnenraum zugewandte Oberfläche der Windschutzscheibe 02.

Die Windschutzscheibe 02 weist mindestens eine Leiterbahn 05 auf, welche von wenigstens einem in Fig. 1 oben rechts, außerhalb des dargestellten Bereichs liegenden Rand der Windschutzscheibe 02 zu einer auf der Innenseite 03 der Windschutzscheibe 02 ausgebildeten Fußfläche 06 führt. Die mindestens eine Leiterbahn 05 bildet dabei zumindest an der Fußfläche 06 wenigstens eine an der Innenseite 03 der Windschutzscheibe 02 vorgesehene erste elektrisch leitende Partie 07 der Oberfläche der Windschutzscheibe 02. Die mindestens eine Leiterbahn 05 bildet darüber hinaus wenigstens eine zumindest an dem mindestens einen Rand der Windschutzscheibe 02 vorgesehene zweite elektrisch leitende Partie der Oberfläche der Windschutzscheibe 02.

Die mindestens eine Leiterbahn 05 kann wie in Fig. 1 dargestellt von dem wenigstens einen Rand zu der Fußfläche 06 zumindest abschnittsweise wenigstens auf die Innenseite 03 der Windschutzscheibe 02 aufgeklebt vorgesehen sein. Zusätzlich kann die mindestens eine Leiterbahn 05 von dem wenigstens einen Rand zu der Fußfläche 06 zumindest abschnittsweise wenigstens auf die Innenseite 03 der Windschutzscheibe 02 aufgedruckt und/oder zumindest abschnittsweise im Inneren der Windschutzscheibe 02 verlaufend angeordnet vorgesehen sein. Besonders bevorzugt ist die mindestens eine Leiterbahn 05 in die Windschutzscheibe 02 integriert.

Kraftfahrzeugseitig ist vorzugsweise mindestens eine dritte elektrisch leitende Partie vorgesehen. Die mindestens eine dritte elektrisch leitende Partie ist beispielsweise mit einem Bordnetz des Kraftfahrzeugs und/oder mit einem Fahrzeuginformationssystem, beispielsweise einem CAN-Bus, und/oder mit mindestens einem wenigstens eine zumindest zum Teil von der Innenrückblickeinheit 04 beherbergte elektrische Komponente 11 von außerhalb der Innenrückblickeinheit 04 steuernden Schalt-und/oder Steuermittel verbunden.

Die mindestens eine dritte elektrisch leitende Partie tritt bei Einbau der Windschutzscheibe 02 in ein Kraftfahrzeug mit der mindestens einen zweiten elektrisch leitenden Partie an wenigstens einem Rand der Windschutzscheibe 02 in elektrisch leitende Verbindung, um eine elektrische Verbindung zwischen beispielsweise dem Bordnetz und/oder dem Fahrzeuginformationssystem und/oder dem Schalt- und/oder Steuermittel und der mit der zweiten elektrisch leitenden Partie vermittels der Leiterbahn 05 elektrisch leitend verbundenen ersten elektrisch leitenden Partie 07 herzustellen.

Die Innenrückblickeinheit 04 weist einen zur Anordnung an der Innenseite 03 der Windschutzscheibe 02 vorgesehenen Fuß 08 sowie einen an diesem vorzugsweise gelenkig angeordneten Kopf 09 mit einer Projektionsfläche 10 auf. Die Innenrückblickeinheit 04 beherbergt zumindest zum Teil wenigstens eine elektrische Komponente 11.

Der Fuß 08 der Innenrückblickeinheit 04 weist eine Verbindungsfläche 12 auf. Die Verbindungsfläche 12 liegt bei an einer vorgesehenen Einbauposition auf der Fußfläche 06 an der Innenseite 03 der Windschutzscheibe 02 aufstehend befestigtem Fuß 08 an der Innenseite 03 der Windschutzscheibe 02 an.

In der Verbindungsfläche 12 ist mindestens ein elektrischer Kontakt 13 untergebracht. Der mindestens eine elektrische Kontakt 13 steht mit der wenigstens einen von der Innenrückblickeinheit 04 zumindest zum Teil beherbergten elektrischen Komponente 11 in elektrisch leitender Verbindung.

Als elektrischer Kontakt 13 eignen sich beispielsweise wie in den Fig. 1 und 2 dargestellt beispielsweise aus Kupferblech hergestellte Federzungen.

Der mindestens eine elektrische Kontakt 13 bildet wenigstens eine zumindest an der Verbindungsfläche 12 ausgebildete, vierte elektrisch leitende Partie 14 an der Oberfläche des Fußes 08 der Innenrückblickeinheit 04.

In einem an der Innenseite 03 der Windschutzscheibe 02 angeordneten Zustand der Innenrückblickeinheit 04 ist die Verbindungsfläche 12 des Fußes 08 der Innenrückblickeinheit 04 an der Fußfläche 06 der Windschutzscheibe 02 derart anliegend befestigt, dass mindestens eine an der Verbindungsfläche 12 ausgebildete vierte elektrisch leitende Partie 14 der Oberfläche des Fußes 08 der Innenrückblickeinheit 04 in elektrisch leitender Verbindung mit mindestens einer an der Fußfläche 06 ausgebildeten ersten elektrisch leitenden Partie 07 der Oberfläche der Windschutzscheibe 02 steht.

Hierdurch wird eine vollständige elektrische Verbindung beispielsweise von einem mit der mindestens einen kraftfahrzeugseitigen, dritten elektrisch leitenden Partie verbundenen Bordnetz und/oder Fahrzeuginformationssystem und/oder Schalt-und/oder Steuermittel eines Kraftfahrzeugs zu wenigstens einer zumindest zum Teil von der Innenrückblickeinheit 04 beherbergten elektrischen Komponente 11:
- via die mindestens eine kraftfahrzeugseitige dritte elektrische Partie von dem Bordnetz und/oder Fahrzeuginformationssystem und/oder Schalt-und/oder Steuermittel zu der mindestens einen windschutzscheibenseitigen zweiten elektrisch leitenden Partie,
- via die mindestens eine Leiterbahn 05 von der mindestens einen windschutzscheibenseitigen zweiten elektrisch leitenden Partie zu der mindestens einen windschutzscheibenseitigen ersten elektrisch leitenden Partie 07,
- via die mindestens eine windschutzscheibenseitige erste elektrisch leitende Partie 07 von der mindestens einen Leiterbahn 05 zu der mindestens einen innenrückblickeinheitenseitigen und mit der mindestens einen zumindest zum Teil von der Innenrückblickeinheit 04 beherbergten elektrischen Komponente 11 elektrisch verbundenen vierten elektrischen Partie 14
hergestellt.

Bei mindestens einer von der Innenrückblickeinheit 04 zumindest zum Teil beherbergten und mit mindestens einem in der Verbindungsfläche 12 untergebrachten elektrischen Kontakt 13 in elektrische leitender Verbindung stehenden elektrischen Komponente 11 kann es sich wenigstens um:
- einen elektromotorischen Verstellantrieb zur Einstellung einer individuellen Verstelllage des Kopfs 09 gegenüber dem Fuß 08 oder der Projektionsfläche 10 gegenüber dem Kopf 09 abhängig von Größe und Sitzposition des Fahrers des Kraftfahrzeugs, und/oder
- eine Innenraumbeleuchtung 15, welche zur individuellen Einstellung in ihrem Betrieb zwischen ausgeschaltet oder bei geöffneter Fahrzeugtür eingeschaltet oder dauerhaft eingeschaltet umgeschaltet und/oder in ihrer Helligkeit verändert werden kann, und/oder
- eine bei Dunkelheit und/oder bei eingeschaltetem Fahrlicht des Kraftfahrzeugs beispielsweise dauerhaft eingeschaltete ambiente Innenraumbeleuchtung 16, welche zur individuellen Einstellung ein- und ausgeschaltet und/oder in ihrer Helligkeit verändert werden kann, und/oder
- eine Lesebeleuchtung 17, welche zur individuellen Einstellung ein- und ausgeschaltet und/oder in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann, und/oder
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können, und/oder
- mindestens einen Sensor einer Fahrzeuginnenraumklimatisierung, welche zur individuellen Einstellung vollständig ein- und ausgeschaltet, in Bezug auf die einzuhaltende Temperatur im Fahrzeuginnenraum verändert oder zwischen einem Betrieb beispielsweise einer Kältemaschine und deren Nichtbetrieb umgeschaltet werden kann, und/oder
- eine von außen durch die Windschutzscheibe 02 hindurch sichtbare Anzeigevorrichtung, welche zu deren individueller Einstellung vollständig ein- und ausgeschaltet sowie in Bezug auf deren Anzeige verstellt werden kann, und/oder
- eine vom Fahrzeuginnenraum aus einsehbare Anzeigevorrichtung, welche zu deren individueller Einstellung vollständig ein- und ausgeschaltet sowie in Bezug auf deren Anzeige verstellt werden kann, und/oder
- eine Sendeeinrichtung zur Fernbetätigung eines elektrischen Torantriebs, beispielsweise eines Hof- und/oder Garagentors, und/oder
- mindestens ein Bedienelement für wenigstens eine von der Innenrückblickeinheit 04 zumindest zum Teil beherbergte und/oder außerhalb der Innenrückblickeinheit 04 angeordnete elektrische Komponente 11
handeln.

Alternativ oder zusätzlich können bei einer als Innenrückblickspiegelanordnung ausgestalteten Innenrückblickeinheit 04 ein als Projektionsfläche 10 vorgesehenes elektrochromatisch abblendbares Spiegelglas und bei einer als Innenrückblickkameraanordnung ausgestalteten Innenrückblickeinheit 04 eine als Projektionsfläche 10 vorgesehene Anzeigevorrichtung eine zumindest zum Teil von der Innenrückblickeinheit 04 beherbergte und mit mindestens einem in der Verbindungsfläche 12 untergebrachten elektrischen Kontakt 13 in elektrische leitender Verbindung stehende elektrische Komponente 11 bilden.

Die Innenrückblickeinheitanordnung 01 stellt damit eine gegenüber dem Stand der Technik verbesserte elektrische Verbindung zu mindestens einer zumindest zum Teil von einer Innenrückblickeinheit 04 beherbergten elektrischen Komponente 11 zur Verfügung, die ohne zusätzlichen Montageaufwand auskommt. Die elektrische Verbindung wird bei bestimmungsgemäßer Anordnung der Innenrückblickeinheit 04 an der Innenseite 03 der Windschutzscheibe 02 und bei bestimmungsgemäßer kraftfahrzeugseitigen Anordnung der Windschutzscheibe 02 ohne zusätzliches Zutun hergestellt.

Wichtig ist hervorzuheben, dass der Fuß 08 beispielsweise wie in den Fig. 1 und 2 dargestellt zwei- und/oder mehrteilig ausgebildet sein kann. Beispielsweise kann der Fuß 08 aus einem Schuh 18 und einem Arm 19 bestehen, der lösbar oder unlösbar mit dem Schuh 18 verbunden sein kann. Beispielsweise umfasst der Schuh 18 die Verbindungsfläche 12, und der Arm 19 die gelenkige Verbindung zum Kopf 09. Zur lösbaren oder unlösbaren Verbindung des Schuhs 18 und des Arms 19 eignet sich beispielsweise eine Rastverbindung. Eine beispielsweise als Rastverbindung ausgebildete lösbare oder unlösbare Verbindung kann beispielsweise so ausgebildet sein, dass der Arm 19 vorzugsweise in einer bei in ein Kraftfahrzeug eingebautem Zustand durch die Schwerkraft unterstützten, in den Fig. 1 und 2 durch Pfeile E angedeuteten Einschubrichtung in den Schuh 18 eingeschoben wird, um die lösbare oder unlösbare Verbindung herzustellen. Dabei können innenliegend im Schuh 18 und im Arm 19 je Teile einer beispielsweise aus Stecker 21 und Buchse 22 bestehenden elektrischen Steckverbindung 20 vorgesehen sein, welche elektrische Steckverbindung 20 beim Einschieben des Arms 19 in den Schuh 18 in Einschubrichtung E ebenfalls ohne zusätzliches Zutun hergestellt wird.

In diesem Fall stellt damit auch die elektrische Steckverbindung 20 einen Abschnitt der durch die Innenrückblickeinheitanordnung 01 zur Verfügung gestellten elektrischen Verbindung zu mindestens einer zumindest zum Teil von der Innenrückblickeinheit 04 beherbergten elektrischen Komponente 11 dar.

Ein sich aus einer zwei- oder mehrteiligen Ausbildung des Fußes 08 ergebender Vorteil ist, dass der Schuh 18 einfach in der Handhabung ohne den Arm 19 und den daran vorgesehenen Kopf 09 einfach an der Fußfläche 06 an der Innenseite 03 der Windschutzscheibe 02 montiert werden kann.

Die Erfindung ist insbesondere im Bereich der Herstellung von Windschutzscheiben, Innenrückblickeinheiten und Innenrückblickeinheitanordnungen für Kraftfahrzeuge gewerblich anwendbar.

### Bezugszeichenliste

- 01: Innenrückblickeinheitanordnung
- 02: Windschutzscheibe
- 03: Innenseite
- 04: Innenrückblickeinheit
- 05: Leiterbahn
- 06: Fußfläche
- 07: erste elektrisch leitende Partie
- 08: Fuß
- 09: Kopf
- 10: Projektionsfläche
- 11: elektrische Komponente
- 12: Verbindungsfläche
- 13: elektrischer Kontakt
- 14: vierte elektrisch leitende Partie
- 15: Innenraumbeleuchtung
- 16: ambiente Innenraumbeleuchtung
- 17: Lesebeleuchtung
- 18: Schuh
- 19: Arm
- 20: elektrische Steckverbindung
- 21: Stecker
- 22: Buchse
- E: Einschubrichtung

## Patentansprüche

1. Windschutzscheibe (02) für ein Kraftfahrzeug mit:
- mindestens einer Leiterbahn (05), wobei
- die mindestens eine Leiterbahn (05) von wenigstens einem Rand der Windschutzscheibe (02) zu einer auf der Innenseite (03) der Windschutzscheibe (02) ausgebildeten Fußfläche (06) führt,
- die mindestens eine Leiterbahn (05) zumindest an der Fußfläche (06) wenigstens eine an der Innenseite (03) der Windschutzscheibe (02) vorgesehene erste elektrisch leitende Partie (07) der Oberfläche der Windschutzscheibe (02) bildet, und
- die mindestens eine Leiterbahn (05) wenigstens eine zumindest an dem mindestens einen Rand der Windschutzscheibe (02) vorgesehene zweite elektrisch leitende Partie der Oberfläche der Windschutzscheibe (02) bildet,
**dadurch gekennzeichnet,**
**dass** die mindestens eine Leiterbahn (05) von dem wenigstens einen Rand zu der Fußfläche (06) zumindest abschnittsweise wenigstens auf die Innenseite (03) der Windschutzscheibe (02) aufgeklebt vorgesehen ist.

2. Windschutzscheibe nach Anspruch 1,
**dadurch gekennzeichnet,**
**dass** die mindestens eine Leiterbahn (05) von dem wenigstens einen Rand zu der Fußfläche (06) zumindest abschnittsweise wenigstens auf die Innenseite (03) der Windschutzscheibe (02) aufgedruckt vorgesehen ist.

3. Windschutzscheibe nach Anspruch 1, oder 2,
**dadurch gekennzeichnet,**
**dass** die mindestens eine Leiterbahn (05) von dem wenigstens einen Rand zu der Fußfläche (06) zumindest abschnittsweise im Inneren der Windschutzscheibe (02) verlaufend angeordnet vorgesehen ist.

4. Windschutzscheibe nach einem der vorhergehenden Ansprüche,
**dadurch gekennzeichnet,**
**dass** die mindestens eine Leiterbahn (05) in die Windschutzscheibe (02) integriert ist.

5. Innenrückblickeinheitanordnung (01) eines Kraftfahrzeugs bestehend aus einer Windschutzscheibe (02) und einer an deren Innenseite (03) angeordneten Innenrückblickeinheit (04), die einen zur Anordnung an einer Innenseite (03) einer Windschutzscheibe (02), nach einem der Ansprüche 1 bis 4, vorgesehenen Fuß (08) sowie einen an diesem angeordneten Kopf (09) mit einer Projektionsfläche (10) umfasst, wobei die Innenrückblickeinheit (04) zumindest zum Teil wenigstens eine elektrische Komponente (11) beherbergt und der Fuß (08) der Innenrückblickeinheit (04) eine Verbindungsfläche (12) aufweist, welche bei einer vorgesehenen Einbauposition, in der der Fuß (08) aufstehend auf einer Fußfläche (06) an der Innenseite (03) der Windschutzscheibe (02) befestigt ist,
an der Innenseite (03) der Windschutzscheibe (02) anliegt, die mindestens einen in der Verbindungsfläche (12) untergebrachten und mit wenigstens einer von der Innenrückblickeinheit (04) zumindest zum Teil beherbergten elektrischen Komponente (11) in elektrisch leitender Verbindung stehenden elektrischen Kontakt (13) umfasst, welcher wenigstens eine zumindest an der Verbindungsfläche (12) ausgebildete elektrisch leitende Partie (14) der Oberfläche des Fußes (08) der Innenrückblickeinheit (04) bildet,
wobei Kopf (09) und Fuß (08) der Innenrückblickeinheit (04) gelenkig miteinander verbunden sind, und wobei
die gelenkige Verbindung einen Abklappmechanismus umfasst, vermittels dem der Kopf (09) gegenüber dem Fuß (08) um einen definierten Schwenkwinkel aus einer Betriebsstellung in eine Abklappstellung und umgekehrt verschwenkt werden kann, **dadurch gekennzeichnet, dass**
die Windschutzscheibe (02) eine Windschutzscheibe (02) nach einem der Ansprüche 1 bis 4 umfasst.

6. Innenrückblickeinheitanordnung nach Anspruch 5,
**dadurch gekennzeichnet, dass**
die Verbindungsfläche (12) des Fußes (08) der Innenrückblickeinheit (04) an der Fußfläche (06) der Windschutzscheibe (02) derart anliegend befestigt ist, dass mindestens eine an der Verbindungsfläche (12) ausgebildete elektrisch leitende Partie (14) der Oberfläche des Fußes (08) der Innenrückblickeinheit (04) in elektrisch leitender Verbindung mit mindestens einer an der Fußfläche (06) ausgebildeten ersten elektrisch leitenden Partie (07) der Oberfläche der Windschutzscheibe (02) steht.

7. Innenrückblickeinheitanordnung nach Anspruch 5 oder 6, **dadurch gekennzeichnet, dass**
der Abklappmechanismus mit einem elektromotorischen Verstellantrieb ausgestattet ist, um den Kopf (09) gegenüber dem Fuß (08) aus der Betriebsstellung in die Abklappstellung und umgekehrt zu verschwenken.

8. Innenrückblickeinheitanordnung nach einem der Ansprüche 5 bis 7,
**dadurch gekennzeichnet,**
**dass** die Projektionsfläche (10) gegenüber dem Kopf (09) verstellbar angeordnet ist.

9. Innenrückblickeinheitanordnung nach einem der Ansprüche 5 bis 8,
**dadurch gekennzeichnet,**
**dass** es sich bei mindestens einer von der Innenrückblickeinheit (04) zumindest zum Teil beherbergten und mit mindestens einem in der Verbindungsfläche (12) untergebrachten elektrischen Kontakt (13) in elektrische leitender Verbindung stehenden elektrischen Komponente (11) wenigstens um:
- einen elektromotorischen Verstellantrieb zur Einstellung einer individuellen Verstelllage des Kopfs (09) gegenüber dem Fuß (08) oder der Projektionsfläche (10) gegenüber dem Kopf (09) abhängig von Größe und Sitzposition des Fahrers des Kraftfahrzeugs, und/oder
- eine Innenraumbeleuchtung (15), welche zur individuellen Einstellung in ihrem Betrieb zwischen ausgeschaltet oder bei geöffneter Fahrzeugtür eingeschaltet oder dauerhaft eingeschaltet umgeschaltet und/oder in ihrer Helligkeit verändert werden kann, und/oder
- eine ambiente Innenraumbeleuchtung (16), welche zur individuellen Einstellung ein- und ausgeschaltet und/oder in ihrer Helligkeit verändert werden kann, und/oder
- eine Lesebeleuchtung (17), welche zur individuellen Einstellung ein- und ausgeschaltet und/oder in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann, und/oder
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können, und/oder
- mindestens einen Sensor einer Fahrzeuginnenraumklimatisierung, welche zur individuellen Einstellung vollständig ein- und ausgeschaltet, in Bezug auf die einzuhaltende Temperatur im Fahrzeuginnenraum verändert oder zwischen einem Betrieb beispielsweise einer Kältemaschine und deren Nichtbetrieb umgeschaltet werden kann, und/oder
- eine von außen durch die Windschutzscheibe (02) hindurch sichtbare Anzeigevorrichtung, welche zu deren individueller Einstellung vollständig ein- und ausgeschaltet sowie in Bezug auf deren Anzeige verstellt werden kann, und/oder
- eine vom Fahrzeuginnenraum aus einsehbare Anzeigevorrichtung, welche zu deren individueller Einstellung vollständig ein- und ausgeschaltet sowie in Bezug auf deren Anzeige verstellt werden kann, und/oder
- eine Sendeeinrichtung zur Fernbetätigung eines elektrischen Torantriebs, und/oder
- mindestens ein Bedienelement für wenigstens eine von der Innenrückblickeinheit (04) zumindest zum Teil beherbergte und/oder außerhalb der Innenrückblickeinheit (04) angeordnete elektrische Komponente (11)
handelt.

10. Innenrückblickeinheitanordnung nach einem der Ansprüche 5 bis 9,
**dadurch gekennzeichnet,**
**dass** es sich bei der Innenrückblickeinheit (04) um eine Innenrückblickspiegelanordnung mit mindestens einem Spiegelglas als Projektionsfläche (10) handelt.

11. Innenrückblickeinheitanordnung nach Anspruch 10,
**gekennzeichnet durch**
ein elektrochromatisch abblendbares Spiegelglas, welches wenigstens eine zumindest zum Teil von der Innenrückblickeinheit (04) beherbergte elektrische Komponente (11) bildet.

12. Innenrückblickeinheitanordnung nach einem der Ansprüche 5 bis 11,
**dadurch gekennzeichnet,**
**dass** es sich bei der Innenrückblickeinheit (04) um eine Innenrückblickkameraanordnung mit mindestens einer Anzeigevorrichtung als Projektionsfläche (10) handelt, welche Anzeigevorrichtung wenigstens eine zumindest zum Teil von der Innenrückblickeinheit (04) beherbergte elektrische Komponente (11) bildet.

## Claims

1. A windscreen (02) for a motor vehicle having:
- at least one conductor path (05), wherein
- the at least one conductor path (05) leads from at least one edge of the windscreen (02) to a base (06) formed on the inside (03) of the windscreen (02),
- the at least one conductor path (05) at least on the base (06) forms at least one first electrically conductive portion (07) of the surface of the windscreen (02) provided on the inside (03) of the windscreen (02), and
- the at least one conductor path (05) forms at least one second electrically conductive portion of the surface of the windscreen (02) provided at least on the at least one edge of the windscreen (02),
**characterized in that**
the at least one conductor path (05) from the at least one edge to the base (06) is provided in glued at least in sections at least to the inside (03) of the windscreen (02).

2. The windscreen according to Claim 1,
**characterized in that**
the at least one conductor path (05) from the at least one edge to the base (06) is printed manner at least in sections at least on the inside (03) of the windscreen (02).

3. The windscreen according to Claim 1 or 2,
**characterized in that**
the at least one conductor path (05) from the at least one edge to the base (06) is provided to be arranged extending at least in sections in the inside of the windscreen (02).

4. The windscreen according to any one of the preceding claims,
**characterized in that**
the at least one conductor path (05) is integrated into the windscreen (02).

5. An internal rear view assembly (01) of a motor vehicle consisting of a windscreen (02) and an internal rear view unit (04) arranged on the inside (03) thereof, which comprises a foot (08) provided for arrangement on an inside (03) of a windscreen (02) according to any one of Claims 1 to 4 as well as a head (09) arranged thereon having a projection surface (10), wherein the internal rear view unit (04) houses at least in part at least one electrical component (11) and the foot (08) of the internal rear view unit (04) having a connection surface (12) which, in an intended installation position, in which the foot (08) is affixed upright on a base (06) on the inside (03) of the windscreen (02), rests on the inside (03) of the windscreen (02), which comprises at least one electrical contact (13) which is accommodated in the connection surface (12) and which is electrically conductively connected with at least one electrical component (11) which is at least partially housed by the internal rear view unit (04), said electrical contact forming at least one electrically conductive portion (14) of the surface of the foot (08) of the internal rear view unit (04) which is formed at least on the connection surface (12), wherein the head (09) and the foot (08) of the internal rear view unit (04) are articulately jointed to one another, and wherein
the articulated connection comprises a folding down mechanism, by means of which the head (09) can be swiveled with respect to the foot (08) about a defined swivel angle from an operating position into a folding down position and vice versa.

6. The internal rear view assembly according to Claim 5,
**characterized in that**
the connection surface (12) of the foot (08) of the internal rear view unit (04) is affixed so that it lies in contact with the base (06) of the windscreen (02), such that at least one electrically conductive portion (14) of the surface of the foot (08) of the internal rear view unit (04) formed on the connection surface (12) is electrically conductively connected with at least one first electrically conductive portion (07) of the surface of the windscreen (02) formed on the base (06).

7. The internal rear view assembly according to Claim 5 or 6,
**characterized in that**
the folding down mechanism is fitted with an electromotive adjustment drive, in order to swivel the head (09) with respect to the foot (08) from the operating position into the folding down position and vice versa.

8. The internal rear view assembly according to any one of Claims 5 to 7,
**characterized in that**
the projection surface (10) is arranged in an adjustable manner with respect to the head (09).

9. The internal rear view assembly according to any one of Claims 5 to 8,
**characterized in that**
at least one electrical component (11) which is at least partially housed by the internal rear view unit (04) and which is electrically conductively connected with at least one electrical contact (13) accommodated in the connection surface (12) is at least:
- an electromotive adjustment drive for adjusting an individual adjustment position of the head (09) with respect to the foot (08) or the projection surface (10) with respect to the head (09) depending on the height and seating position of the driver of the motor vehicle, and/or
- an interior lighting (15) which can be switched over in order to individually adjust the operation thereof between switched off or switched on when the vehicle door is open or permanently switched on and/or which can be modified in its brightness, and/or
- an ambient interior lighting (16) which can be individually adjusted by being switched on and off and/or which can be modified in its brightness, and/or
- a reading light (17), which can be individually adjusted by being switched on and off and/or which can be modified in its brightness and/or the operation of which can be switched over between switched off or switched on when the vehicle door is open or permanently switched on, and/or
- a microphone and/or one or more speakers of a telephone system and/or of a vehicle interior sound system, which can be individually adjusted by being switched on and off and/or the sensitivity or volume of which can be modified, and/or
- at least one sensor of a vehicle interior air conditioning system which can be individually adjusted by being completely switched on and off, modified with respect to the temperature to be observed inside the vehicle or which can be switched over between operation, for example, of a cooling system and the non-operation thereof, and/or
- a display device which is visible from outside through the windscreen (02), which can be individually adjusted by being completely switched on and off and which can be adjusted with respect to the display thereof, and/or
- a display device which can be viewed from the vehicle interior, which can be individually adjusted by being completely switched on and off and which can be adjusted with respect to the display thereof, and/or
- a transmitting device for the remote operation of an electric gate drive, and/or
- at least one control element for at least one electrical component (11) which is at least partially housed by the internal rear view unit (04) and/or arranged outside the internal rear view unit (04).

10. The internal rear view assembly according to any one of Claims 5 to 9,
**characterized in that**
the internal rear view unit (04) is an internal rear view mirror arrangement having at least one mirror glass as a projection surface (10).

11. The internal rear view assembly according to Claim 10,
**characterized by** an electro-chromatically dimmable mirror glass which forms at least one electrical component (11) which is at least partially housed by the internal rear view unit (04).

12. The internal rear view assembly according to any one of Claims 5 to 11,
**characterized in that**
the internal rear view unit (04) is an internal rear view camera arrangement having at least one display device as a projection surface (10), which display device forms at least one electrical component (11) which is at least partially housed by the internal rear view unit (04).

## Revendications

1. Pare-brise (02) pour un véhicule à moteur, ayant :
- au moins une piste conductrice (05), dans lequel
- la au moins une piste conductrice (05) conduit d'au moins un bord du pare-brise (02) jusqu'à une embase (06) formée dans le côté intérieur (03) du pare-brise (02),
- la au moins une piste conductrice (05), au moins au niveau de l'embase (06), formant au moins une première partie électriquement conductrice (07) de la surface supérieure du pare-brise (02), prévue sur le côté intérieur (03) du pare-brise (02), et
- la au moins une piste conductrice (05) formant au moins une seconde partie électriquement conductrice de la surface supérieure du pare-brise (02), prévue au moins sur le au moins un bord du pare-brise (02),
**caractérisé en ce que**
la au moins une piste conductrice (05) est conçue collée à partir du au moins un bord jusqu'à l'embase (06), au moins par endroits, au moins sur le côté intérieur (03) du pare-brise (02).

2. Pare-brise selon la revendication 1,
**caractérisé en ce que**
la au moins une piste conductrice (05) est conçue imprimée à partir du au moins un bord jusqu'à l'embase (06), au moins par endroits, au moins sur le côté intérieur (03) du pare-brise (02).

3. Pare-brise selon la revendication 1 ou 2,
**caractérisé en ce que**
la au moins une piste conductrice (05) est conçue agencée de façon à s'étendre à partir du au moins un bord jusqu'à l'embase (06) au moins par endroits à l'intérieur du pare-brise (02).

4. Pare-brise selon l'une quelconque des revendications précédentes,
**caractérisé en ce que**
la au moins une piste conductrice (05) est intégrée dans le pare-brise (02).

5. Agencement d'unité de rétroviseur intérieur (01) d'un véhicule à moteur, consister d'un pare-brise (02) et une unité de rétroviseur intérieur (04) disposée sur son côté intérieur (03), comprenant un pied (08) conçu pour être agencé sur le côté intérieur (03) d'un pare-brise (02) selon l'une quelconque des revendications 1 à 4, ainsi qu'une tête (09) agencée sur celui-ci et ayant une surface de projection (10), dans lequel l'unité de rétroviseur intérieur (04) reçoit au moins en partie au moins un composant électrique (11), et le pied (08) de l'unité de rétroviseur intérieur (04) ayant une surface de liaison (12) dans laquelle, via une position de montage prévue, où le pied (08) est fixé debout sur une embase (06) sur le côté intérieur (03) du pare-brise (02), repose sur le côté intérieur (03) du pare-brise (02), qui comprend au moins un contact électrique (13) installé dans la surface de liaison (12) et en liaison électriquement conductrice avec au moins un composant électrique (11) reçu au moins en partie par l'unité de rétroviseur intérieur (04), lequel forme au moins une partie électriquement conductrice (14), agencée au moins sur la surface de liaison (12), de la surface supérieure du pied (08) de l'unité de rétroviseur intérieur (04),
dans lequel la tête (09) et le pied (08) de l'unité de rétroviseur intérieur (04) sont reliés de manière articulée entre eux, et dans lequel
la liaison articulée comprend un mécanisme de rabattement, au moyen duquel la tête (09) peut pivoter contre le pied (08) sur un angle de pivotement défini à partir d'une position de fonctionnement jusque dans une position rabattue, et vice versa.

6. Agencement d'unité de rétroviseur intérieur selon la revendication 5,
**caractérisé en ce que**
la surface de liaison (12) du pied (08) de l'unité de rétroviseur intérieur (04) est fixée adjacente à l'embase (06) du pare-brise (02) de telle sorte que au moins une partie électriquement conductrice (14), agencée sur la surface de liaison (12) de la surface supérieure du pied (08) de l'unité de rétroviseur intérieur (04) est en liaison électriquement conductrice avec au moins une première partie électriquement conductrice (07), agencée sur l'embase (06), de la surface supérieure du pare-brise (02).

7. Agencement d'unité de rétroviseur intérieur selon la revendication 5 ou 6,
**caractérisé en ce que**
le mécanisme de rabattement est équipée d'un moteur électrique d'entraînement réglable pour faire pivoter la tête (09) par rapport au pied (08) de la position de fonctionnement dans la position rabattue, et vice-versa.

8. Agencement d'unité de rétroviseur intérieur selon l'une quelconque des revendications 5 à 7,
**caractérisé en ce que**
la surface de projection (10) opposée à la tête (09) est agencée de manière à être réglable.

9. Agencement d'unité de rétroviseur intérieur selon l'une quelconque des revendications 5 à 8,
**caractérisé par** :
que au moins un composant électrique (11) reçu au moins partiellement par l'unité de rétroviseur intérieur (04) et en liaison électriquement conductrice avec au moins un contact électrique (13) logé dans la surface de liaison (12) est au moins :
- un moteur électrique d'entraînement réglable pour ajuster une position de réglage individuelle de la tête (09) par rapport au pied (08) ou de la surface de projection (10) par rapport à la tête (09) selon la taille et la position d'assise du conducteur de véhicule à moteur , et/ou
- un éclairage intérieur (15) dont le fonctionnement, pour un ajustement individuel, peut être commuté entre éteint ou ouvert par une ouverture de porte du véhicule ou ouvert de manière durable, et/ou voir sa luminosité modifiée, et/ou
- un éclairage intérieur d'ambiance (16) qui, pour un ajustement individuel, peut être éteint et ouvert et/ou voir sa luminosité modifiée, et/ou
- une lumière de lecture (17) qui, pour un ajustement individuel, peut être éteinte et ouverte et/ou voir sa luminosité modifiée, et/ou dont le fonctionnement peut être commuté entre éteint ou ouvert par une ouverture de porte du véhicule ou ouvert de manière durable, et /ou
- un microphone et/ou un ou plusieurs haut-parleurs d'un système de téléphonie et/ou d'un système de sonorisation d'intérieur d'habitacle de véhicule pouvant, pour un ajustement individuel, être ouverts et éteints, et/ou voir leur sensibilité ou volume modifié(e), et/ou
- au moins un capteur d'une climatisation d'habitacle de véhicule qui, pour un ajustement individuel, peut être complètement ouvert et éteint, modifié en fonction de la température observée à l'habitacle du véhicule, ou voir son fonctionnement commuté par exemple entre une machine pour faire du froid et un non fonctionnement, et/ou
- un dispositif d'affichage visible de l'extérieur à travers le pare-brise (02) qui, pour un ajustement individuel, peut être complètement ouvert et éteint, ainsi qu'ajusté en fonction de son affichage, et/ou
- un dispositif d'affichage visible de l'intérieur de l'habitacle du véhicle qui, pour un ajustement individuel, peut être complètement ouvert et éteint, ainsi qu'ajusté en fonction de son affichage, et/ou
- un dispositif de transmission pour le contrôle à distance d'un entraînement de porte électrique, et/ou
- au moins un élément de commande pour au moins un composant électrique (11) reçu au moins en partie dans l'unité de rétroviseur intérieur (04) et/ou agencé à l'extérieur de l'unité de rétroviseur intérieur (04).

10. Agencement d'unité de rétroviseur intérieur selon l'une quelconque des revendications 5 à 9,
**caractérisé en ce qu'**il s'agit dans
l'une unité de rétroviseur intérieur (04) d'un agencement de miroir de rétroviseur intérieur ayant au moins un verre de miroir comme surface de projection (10).

11. Agencement d'unité de rétroviseur intérieur selon la revendication 10,
**caractérisé par**
un verre de miroir électrochromatique anti-éblouissement, qui forme au moins un composant électrique (11) reçu au moins en partie par l'unité de rétroviseur intérieur (04).

12. Agencement d'unité de rétroviseur intérieur selon l'une quelconque des revendications 5 à 11,
**caractérisé en ce qu'**il s'agit dans
l'unité de rétroviseur intérieur (04) d'un agencement de camera de rétroviseur intérieur ayant au moins un dispositif d'affichage comme surface de projection (10), lequel dispositif d'affichage forme au moins un composant électrique (11) reçu au moins en partie par l'unité de rétroviseur intérieur (04).
